# EUROPÄISCHE PATENTSCHRIFT

(11) **EP 3 294 460 B1**
(45) Veröffentlichungstag und Bekanntmachung des Hinweises auf die Patenterteilung: **22.09.2021**
(21) Anmeldenummer: 16723981.3
(22) Anmeldetag: 09.05.2016
(51) Int. Cl.: B04C 5/04, B04C 5/081, C10J 3/26, C10J 3/42, C10J 3/72, C10J 3/84

(54) **ZYKLONABSCHEIDER SOWIE FESTBETTVERGASER ZUM ERZEUGEN EINES PRODUKTGASES AUS KOHLENSTOFFHALTIGEN EINSATZSTOFFEN MIT EINEM SOLCHEN ZYKLONABSCHEIDER**
CYCLONE SEPARATOR, AND FIXED-BED GASIFIER FOR GENERATING A PRODUCT GAS FROM CARBON-CONTAINING INPUT SUBSTANCES USING SUCH A CYCLONE SEPARATOR
SÉPARATEUR À CYCLONE ET GAZÉIFICATEUR À LIT FIXE POUR PRODUIRE UN GAZ À PARTIR DE MATIÈRES DE CHARGE CARBONÉES À L'AIDE D'UN TEL SÉPARATEUR À CYCLONE

(30) Priorität: 13.05.2015 DE 102015208923
(43) Veröffentlichungstag der Anmeldung: 21.03.2018
(73) Patentinhaber: Rosmarin Holdings Limited, Ramsey IM8 2LQ (IM)
(72) Erfinder: DRESSLER, Horst, 92360 Mühlhausen (DE); HOFMEISTER, Michael, 94269 Rinchnach (DE)
(74) Vertreter: Ernicke, Moritz
(86) Internationale Anmeldenummer: PCT/EP2016/060356
(87) Internationale Veröffentlichungsnummer: WO 2016/180791

(56) Entgegenhaltungen:
- WO-A1-2005/021162
- WO-A1-2013/124536
- GB-A- 2 481 429
- US-A- 3 306 461
- US-A- 3 850 816

## Beschreibung

Die Erfindung betrifft einen Zyklonabscheider nach dem Oberbegriff von Anspruch 1 sowie einen Festbettvergaser zum Erzeugen eines Produktgases aus kohlenstoffhaltigen Einsatzstoffen dessen Produktgasausgang ein solcher Zyklonabscheider nachgeschaltet ist.

Festbettvergaser zur Erzeugen eines brennbaren Produktgases aus Biomassepellets, insbesondere aus Hackschnitzel oder Holzpellets, zeichnen sich durch einen vergleichsweise einfachen Aufbau aus. Man unterscheidet Gegenstrom- und Gleichstromvergaser. Beim Gegenstromvergaser ist die Strömungsrichtung der Verbrennungsluft und des Produktgases einerseits und der Zuführrichtung der Biomasseteilchen entgegengesetzt und beim Gleichstromvergaser stimmt die Zuführrichtung der Biomasseteilchen mit der Strömungsrichtung von Verbrennungsluft und Produktgas überein. In Festbettvergasern werden verschiedene Reaktionszonen, nämlich Trocknungs-, Pyrolyse-, Oxidations- und Reduktionszone unterschieden, in denen verschieden thermochemische Reaktionen ablaufen.

Eine Übersicht zum Thema Festbettvergasung von Biomasseteilchen ist aus dem Vortrag "Festbett-Vergasung ―Stand der Technik (Überblick)" von Lettner, Haselbacher und Timmerer auf der Tagung " Thermo-chemische Biomasse-Vergasung für eine effiziente Strom/Kraftstoffbereitstellung ― Erkenntnisstand 2007" im Februar 2007 in Leipzig (http://www.holzgasjournal.de/download/2_Stufen_vergaser_1.pdf) bekannt. In dieser Übersicht ist ein Gleichstromschachtvergaser erläutert, bei dem die Biomasseteilchen von oben mit der Schwerkraft dem Vergaserbehälter zugeführt werden. Die Verbrennungsluft wird im mittleren Bereich über Düsen zugeführt und das Produktgas wird aus dem unteren Bereich des Vergaserbehälters abgezogen. In diesem bekannten Festbettvergaser bildet sich von oben nach unten die Trocknungs- Pyrolyse-, Oxidations- und Reduktionszone aus. Die Oxidationszone bildet sich im Bereich der Luftzuführung aus und soll auf diese Zone begrenzt bleiben, die Reduktionszone darunter, unmittelbar über dem Rost. Der Produktgasabzug erfolgt aus dem Bereich des Vergaserbehälters unter dem Rost in dem sich auch die durch den Rost fallende kleinteilige Asche ansammelt.

In dem Produktgas sind verfahrensbedingt Feststoffpartikel unterschiedlicher Größe enthalten. Die größten Feststoffpartikel werden üblicherweise mit einem nachgeschalteten Zyklonabscheider abgeschieden. Ein derartiger Zyklonabscheider ist aus der DE 4233174 A1 bekannt. Dieser bekannte Zyklonabscheider umfasst einen nach unten konisch zulaufenden Trennkörper mit einer Längsachse, einen von oben in den Trennkörper eintauchenden Gasauslass, einen am unteren Ende des Trennkörpers angeordneten Partikelauslass und einen quer zur Längsachse des Trennkörpers in den Trennkörper mündenden Gaseinlass, wobei der Gaseinlass ein erstes Ende und zweites Ende aufweist, wobei das zweite Ende in den Trennkörper mündet, und wobei der Gaseinlass (16) sich in Achsrichtung des Trennkörpers verbreitert und den Trennkörper spiralförmig umgreift. Die Querschnittsfläche des Gaseinlasses bleibt zwischen dem ersten und dem zweiten Ende des Gaseinlasses im Wesentlichen konstant. Aus der DE 825332 B ist ein ähnlicher Zyklonabscheider bekannt, bei dem sich die Querschnittsfläche zwischen dem ersten und dem zweiten Ende des Gaseinlasses vergrößert. Es hat sich herausgestellt, dass Partikelabscheidungseffizienz dieser bekannten Zyklonabscheider insbesondere beim Einsatz zum Reinigen von Produktgas aus Festbettvergasern unzureichend ist.

US 3306461 A1 offenbart einen Zyklonabscheider zur Abscheidung von Feststoffen aus Flüssigkeiten, dessen Einlassstutzen eine Querschnittsfläche aufweist, welche sich in Strömungsrichtung verringert. Ein ähnlicher Zyklonabscheider ist aus WO 2005/021162 A1 bekannt. Der Zyklonabscheider in US 3 850 816 A hat einen Einlassstutzen, welcher in Strömungsrichtung zunächst kontinuierlich enger wird, in einem zweiten Abschnitt einen konstanten Querschnitt aufweist und in einem dritten Abschnitt kontinuierlich erweitert wird.

WO 2013/124536 A1 beschreibt einen Gasgenerator zur Erzeugung eines Produktgases aus Brennstoffen, welcher einen drehbaren Rost aufweist.

GB 2 481 429 A beschreibt einen Zyklonabscheider mit mindestens zwei Trennkörpern, wobei in den Gaseinlass ein Trennblech eingebaut ist, welches den Gasstrom auf die Trennkörper aufteilt.

Ausgehend von der US 3306461 A1 oder der WO 2005/021162 A1 ist es Aufgabe der vorliegenden Erfindung, einen Zyklonabscheider mit verbesserten Abscheideeigenschaften anzugeben. Weiter ist es Aufgabe der Erfindung, einen Festbettvergaser zum Erzeugen eines Produktgases aus kohlenstoffhaltigen Einsatzstoffen mit einem solchen Zyklonabscheider anzugeben.

Die Lösung dieser Aufgabe erfolgt durch die Merkmale des Anspruchs 1 bzw. 10.

Durch die spiralförmige Verbreiterung des Gaseinlasses verbessert sich die Partikelabscheideeffizienz. Durch die Verbreiterung des Gaseinlasses wird die Ausbildung und Aufrechterhaltung der Wirbelströmung im Trennkörper unterstützt. Durch die Querschnittsverkleinerung erhöhen sich die Strömungsgeschwindigkeit und damit die Effizienz der Partikelabscheidung. Durch das wenigstens eine Leitblech im Gaseinlass wird gewährleistet, dass sich die Feststoffpartikel über den ganzen Querschnitt des Gaseinlasses verteilen.

Praktische Erfahrung zeigt, dass ein Flächenverhältnis gemäß Anspruch 2 und die Dimensionierung nach Anspruch 5 zur Verbesserung der Partikelabscheidung beiträgt.

Durch die kontinuierliche Querschnittsflächenverkleinerung nach Anspruch 3 wird die Partikelabscheidung ebenfalls verbessert.

Durch den geradlinig verlaufenden Abschnitt des Gaseinlasses nach Anspruch 4 wird eine homogene Partikelverteilung über den Querschnitt erreicht. Zusätzlich wird die Agglomeration zu größeren, leichter abscheidbaren Partikeln gefördert.

Durch die sprunghafte Querschnittsflächenerweiterung nach Anspruch 8 ergeben Geschwindigkeitsänderungen des Gasstroms, die zu einer erhöhten Agglomeration von kleinen zu größeren Partikeln führt. Hierdurch wird die Partikelabscheiderate verbessert. Eine verbesserte Agglomeration ist insbesondere bei "klebrigen" Partikeln, z. B. Kokspartikeln möglich.

Durch die vorteilhafte Ausgestaltung in Form eines Doppelzyklons nach Anspruch 9 wird ebenfalls die Partikelabscheiderate erhöht. Es hat sich herausgestellt, dass die Partikelabscheiderate bei größeren Gasströmen und größeren Trennkörpern sinkt. Durch die Ausgestaltung als Doppelzyklon wird dieser negative Effekt kompensiert.

Der Festbettvergaser nach Anspruch 10 erlaubt eine sichere und stabile Prozessführung und stellt kontinuierlich ein teerarmes Produktgas bereit.

Bei der Ausgestaltung nach Anspruch 11 erfolgt die Luftzufuhr durch die Biomasseteilchenschüttung in dem rohrförmigen Vergaserbauteil. Hierdurch ergibt sich eine Gleichverteilung der Luft. Durch diese Gleichverteilung sind in der Oxidationszone kaum Temperaturunterschiede vorhanden. Dies hat zur Folge, dass auch Pyrolysegase, welche über der Oxidationszone entstehen, gleichmäßig durch die Oxidationszone strömen. Durch diese Gleichmäßigkeit der Gas und Luftströmungen lässt sich ein Produktgas mit geringen Teermengen erzeugen. Diese Ausgestaltung ist Gegenstand der DE102014225166.4, auf deren Offenbarung vollinhaltlich Bezug genommen wird.

Die übrigen Unteransprüche beziehen sich auf weiter vorteilhafte Ausgestaltungen der Erfindung.

Weitere Einzelheiten, Merkmale und Vorteile der Erfindung ergeben sich aus der nachfolgenden Beschreibung vorteilhafter Ausführungsformen anhand der Zeichnung.

Es zeigt
Fig. 1 eine schematische Schnittdarstellung einer beispielhaften Ausgestaltung eines Zyklonabscheiders gemäß der vorliegenden Erfindung;
Fig. 2 eine schematische Schnittdarstellung der beispielhaften Ausgestaltung nach Fig. 1 mit einer Schnittebene, die senkrecht zu der Schnittebene in Fig. 1 liegt;
Fig. 3 eine schematische perspektivische Darstellung der Ausgestaltung nach Fig. 1 und 2 von der Seite;
Fig. 4 eine alternative Ausgestaltung des Zyklonabscheiders mit zwei Querschnittsflächensprüngen unmittelbar vor der Schleuseneinrichtung,
Fig. 5 eine weitere Ausführungsform des Zyklonabscheiders als Doppelzyklon; und
Fig. 6 eine schematische Schnittdarstellung einer beispielhaften Ausgestaltung des Festbettvergasers mit Temperaturmesseinrichtung und drehbarem Rost.

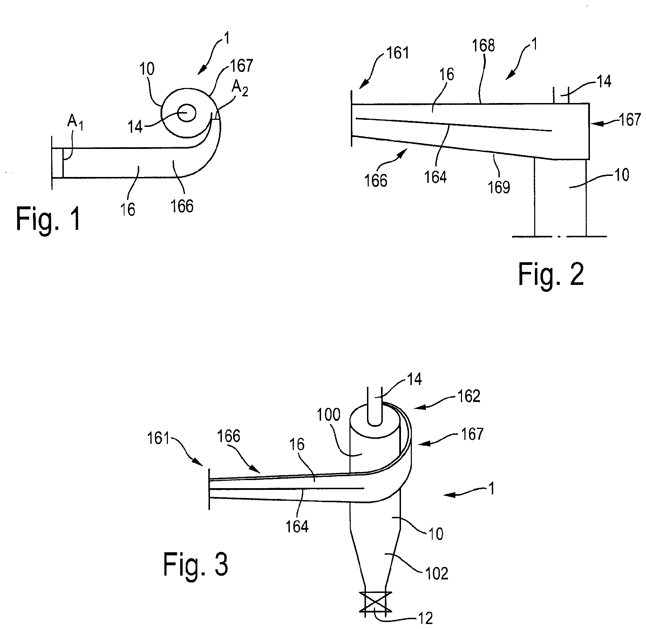

Figuren 1 bis 3 zeigen eine beispielhafte Ausgestaltung eines Zyklonabscheiders 2 gemäß der vorliegenden Erfindung. Der Zyklonabscheider 1 umfasst einen nach unten konisch zulaufenden Trennkörper 10, der durch eine Schleuseneinrichtung 12 zum Abführen der abgeschiedenen Feststoffpartikel endet. Der Trennkörper 10 umfasst einen oberen säulenförmigen Abschnitt 100 mit konstantem kreisförmigem Querschnitt. Unter dem säulenförmigen Abschnitt 100 ist ein konusförmiger Abschnitt 102 angeordnet, der mit der Schleuseneinrichtung 12 endet. Am oberen Ende des Trennkörpers 10 ragt ein rohrförmiger Gasauslass 14 aus dem säulenförmigen Abschnitt 101 heraus, über den das gereinigte Gas mit vermindertem Feststoffpartikelanteil angeführt wird. Der rohrförmige Gasauslass 14 erstreckt sich in den Trennkörper 10 hinein und endet noch vor dem konusförmigen Abschnitt 102.

Das mit Feststoffpartikeln belastete Gas, z. B. Produktgas aus einem Festbettvergaser, wird über einen sich quer zur Längsachse des Trennkörpers 10 erstreckenden Gaseinlass 16 dem Trennkörper 10 zugeführt. Der Gaseinlass 16 umfasst ein erstes Ende 161 und ein zweites Ende 162 und einen geradlinigen Abschnitt 166 und einen spiralförmigen Abschnitt 167. An dem ersten Ende 161 tritt das mit Feststoffpartikeln belastete Gas in den Gaseinlass 16 ein, durchströmt nacheinander den geradlinigen Abschnitt 166, den spiralförmigen Abschnitt 167 und tritt über das zweite Ende 162 in den säulenförmigen Abschnitt 100 des in den Trennkörper 10 ein. Das erste Ende 161 des Gaseinlasses 16 weist einen rechteckigen Querschnitt mit einer ersten Querschnittsfläche A₁ auf. Der Gaseinlass 16 verbreitert sich zwischen dem ersten Ende 161 und dem zweiten Ende 162, so dass der größte Durchmesser D des Gaseinlasses 16 am zweiten Ende 162 in etwa dem Durchmesser des säulenförmigen Abschnitts 100 des Trennkörpers 10 entspricht. Gleichzeitig verringert sich die Querschnittsfläche des Gaseinlasses 16 kontinuierlich bis zu einer minimalen Querschnittsfläche A₂ am zweiten Ende 162 des Gaseinlasses 16. Das Verhältnis von A₂ zu A₁ beträgt in der beispielhaften Ausgestaltung 0,5. Durch die Verbreiterung des Gaseinlasses 16 zum zweiten Ende 162 hin ist die Querschnittsfläche A₂ am zweiten Ende 162 langgezogen und mündet langezogen und mit kleinerem Flächenquerschnitt A₂ in den säulenförmigen Abschnitt 100 des Trennkörpers 10.

In dem geradlinig verlaufenden Abschnitt 166 des Gaseinlasses 10 ist in Strömungsrichtung ein geradliniges Leitblech 164 angeordnet, das dafür sorgt, dass sich die Feststoffpartikel über den sich verbreiternden Querschnitt des Gaseinlasses verteilen und sich nicht zentral im Gasstrom konzentrieren. Der Gaseinlass 16 weist eine Oberkante 168 und eine Unterkante 169 auf. Die Oberkante 168 verläuft senkrecht zur Längsachse des Trennkörpers 10. Die Unterkante 169 bildet einen stumpfen bzw. spitzen Winkel mit der Längsachse bzw. der Vertikalen.

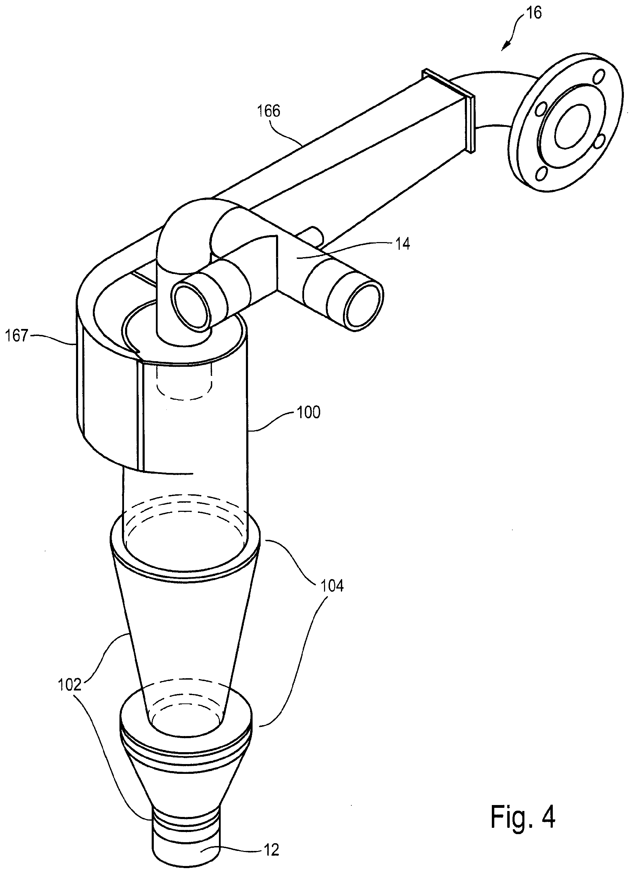

Fig. 4 zeigt eine alternative Ausgestaltung eines Zyklonabscheiders 1 mit einem Trennkörper 10, der Strömungsrichtung unmittelbar vor der Schleuseneinrichtung 12 zwei sprunghafte Querschnittsflächenerweiterungen 104 aufweist. Durch die damit verursachte Geschwindigkeitsänderung des Gasstroms erhöht sich die Agglomeration von kleineren zu größeren Partikeln. Da sich größere Partikel leichter abscheiden lassen, erhöht sich die Partikelabscheiderate.

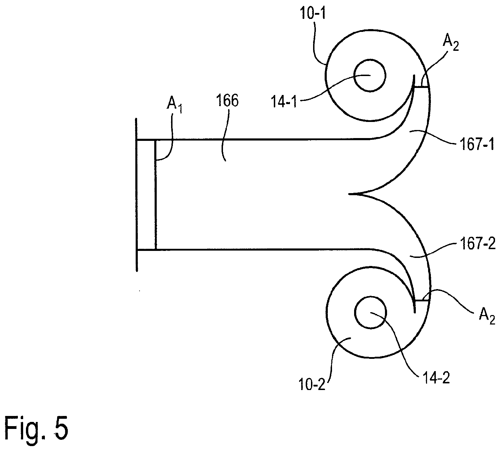

Fig. 5. zeigt eine weitere Ausgestaltung der Erfindung in Form eines Doppelzyklons mit einem gemeinsamen geradlinig verlaufenden Abschnitt 166, der in einen ersten und einen zweiten spiralförmig verlaufenden Abschnitt 167-1 und 167-2 mit entgegengesetztem Drehsinn, die dann in einen ersten und einen zweiten Trennkörper 10-1 und 10-2 münden.

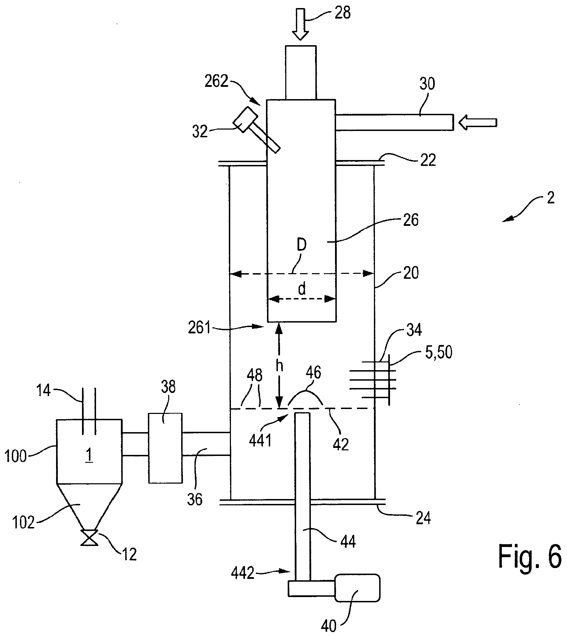

Fig. 6 zeigt eine schematische Darstellung einer beispielhaften Ausgestaltung eines Festbettvergaser 2 gemäß der vorliegenden Erfindung. Der Festbettvergaser 2 umfasst einen rohrförmigen Vergaserbehälter 20, dessen Enden mit einem oberen Deckel 22 und einen unteren Deckel 24 verschlossen sind. Ein rohrförmiges Vergaserbauteil 26 mit einem offenen Ende 261 und einem geschlossenen Ende 262 ragt mit dem offenen Ende 261 in den Vergaserbehälter 20 hinein. Das geschlossene Ende 262 des Vergaserbauteils 26 ragt durch den oberen Deckel 22 aus dem Vergaserbehälter 20 heraus. Das offene Ende 261 des Vergaserbauteils 26 kommt in etwa in der Mitte des Vergaserbehälters 20 zu liegen. Im Abstand h unter dem offenen Ende 261 des Vergaserbauteils 26 ist ein drehbarer Rost 4 angeordnet, der durch einen motorischen Antrieb 40, der den unteren Deckel 24 durchsetzt, periodisch bewegt werden kann. In das aus dem Vergaserbehälter 20 herausragende geschlossene Ende 262 des Vergaserbauteils 26 münden eine Zuführung 28 für kohlenstoffhaltige Einsatzstoffe in Form von schüttbaren Biomasseteilchen, eine Luftzuführung 30 zur Zuführung von Verbrennungsluft in den Vergaserbehälter 20 und ein Füllstandssensor 32, mit dem sich der Füllstand der Biomasseteilchen im rohrförmigen Vergaserbauteil 26 ermitteln und überwachen lässt. Im Bereich des offenen Endes 261 des Vergaserbauteils 26 ist ein Revisionsschacht 34 vorgesehen, der die Außenwand des Vergaserbehälters 20 durchdringt. Der Revisionsschacht 34 wird durch einen Abdeckflansch 50 verschlossen, der Teil einer Temperaturmesseinrichtung 5 ist. Durch die Temperaturmesseinrichtung 5 kann die Temperatur im Vergaserbehälter 20 überwacht werden. Über dem Revisionsschacht 34 können bei Stillstand des Reaktors, Wartungsarbeiten, Reinigungsarbeiten im Reaktorbehälterinneren vorgenommen werden.

Der drehbare Rost 4 umfasst einen scheibenförmigen Hauptteil 42 zum Abstützen der kohlenstoffhaltigen Einsatzstoffe bzw. der Biomasseteilchen. Der Hauptteil 42 ist mittig auf einer Drehachse 44 montiert, die den unteren Deckel 24 des Vergaserbehälters 20 durchsetzt und durch den motorischen Antrieb 40 in Drehung versetzt werden kann. Im zentralen Bereich über der Drehachse 44 ist auf der Oberseite des Hauptteils 42 eine domförmige Abdeckung 46 angeordnet. In konzentrischen Kreisen um die Mitte des Hauptteils 42 sind eine Mehrzahl von schlitzförmigen Öffnungen 48 für den Durchtritt von Asche und Produktgas durch das Hauptteil 42 vorgesehen.

Im Bereich unter dem Rost 4 wird über einen Produktgasabzug 36 Produktgas aus dem Vergaserbehälter 20 abgezogen, in einem Wärmetauscher 38 gekühlt in einem nachgeschalteten Zyklonabscheider 1 gereinigt. Die durch den Rost 4 fallende Asche wird durch den Produktgasstrom über den Produktgasabzug 36 aus dem Festbettvergaser 2 ausgetragen.

Sowohl der rohrförmige Vergaserbehälter 20 als auch das rohrförmige Vergaserbauteil 26 weisen einen kreisringförmigen Querschnitt auf und sind konzentrisch zueinander angeordnet. Das rohrförmige Vergaserbauteil 26 weist einen Innendurchmesser d auf, der kleiner ist als der Innendurchmesser D des rohrförmigen Vergaserbehälters 20.

### Bezugszeichenliste:

- A₁: Querschnittsfläche von 16 am ersten Ende 161
- A₂: Querschnittsfläche von 16 am zweiten Ende 162
- h: Abstand zwischen 261 und 44
- d: Innendurchmesser von 26
- D: Innendurchmesser von 20

- 1: Zyklonabscheider
- 10-i: Trennkörper
- 100: säulenförmiger Abschnitt
- 102: konusförmiger Abschnitt
- 104: sprunghafte Querschnitsflächerweiterung

- 12: Schleuseneinrichtung von 1
- 14-i: Gasauslass von 1
- 16: Gaseinlass von 1
- 161: erstes Ende von 16
- 162: zweites Ende von 16
- 164: Leitblech
- 166: geradliniger verlaufender Abschnitt von 16
- 167-i: spiralförmiger verlaufender Abschnitt von 16
- 168: Oberkante von 16
- 169: Unterkante von 16

- 2: Festbettvergaser
- 20: Vergaserbehälter
- 22: oberer Deckel
- 24: unterer Deckel
- 26: Vergaserbauteil
- 261: offenes Ende von 26
- 262: geschlossenes Ende von 26
- 28: Zuführung für kohlenstoffhaltige Einsatzstoffe
- 30: Luftzuführung
- 32: Füllstandssensor
- 34: Revisionsschacht
- 36: Produktgasabzug
- 38: Wärmetauscher

- 4: drehbarer Rost
- 40: motorischer Antrieb
- 42: Hauptteil
- 44: Drehachse
- 46: domförmige Abdeckung
- 48: schlitzförmige Öffnungen

- 5: Temperaturmesseinrichtung
- 50: Abdeckflansch

## Patentansprüche

1. Zyklonabscheider (1) zur Abscheidung von Feststoffpartikeln aus einem Gasstrom, mit
einem nach unten konisch zulaufenden Trennkörper (10), der eine Längsachse aufweist,
einem von oben in den Trennkörper (10) eintauchenden Gasauslass (14), einem am unteren Ende des Trennkörpers (10) angeordneten Partikelauslass (12), und
einem quer zur Längsachse des Trennkörpers (10) in den Trennkörper (10) mündenden Gaseinlass (16), wobei der Gaseinlass (16) ein erstes Ende (161) und zweites Ende (162) aufweist, wobei das zweite Ende (162) in den Trennkörper (10) mündet, und wobei der Gaseinlass (16) sich in Achsrichtung des Trennkörpers (10) verbreitert und den Trennkörper spiralförmig umgreift, wobei der Gaseinlass (16) am ersten Ende (161) eine Anfangsquerschnittsfläche (A₁) aufweist, die sich in Richtung Trennkörper (10) zu einer minimalen Querschnittsfläche
(A₂) am zweiten Ende (162) verringert,
**dadurch gekennzeichnet, dass**
in dem Gaseinlass (16) wenigstens ein Leitblech (164) zur Verteilung der in dem Gasstrom enthaltenen Feststoffpartikel über den sich verbreiternden Querschnitt des Gaseinlasses (16) angeordnet ist.

2. Zyklonabscheider nach Anspruch 1, **dadurch gekennzeichnet, dass** die Querschnittsfläche am zweiten Ende (A₂) zwischen 30% und 70% und insbesondere zwischen 40% und 60% der Anfangsquerschnittfläche (A₁) beträgt.

3. Zyklonabscheider nach einem der vorhergehenden Ansprüche, **dadurch gekennzeichnet, dass** sich die Querschnittsfläche (A) des Gaseinlasses (16) kontinuierlich verringert.

4. Zyklonabscheider nach einem der vorhergehenden Ansprüche, **dadurch gekennzeichnet, dass** der Gaseinlass (16) einen geradlinig verlaufenden Abschnitt (166) und einen spiralförmig verlaufenden Abschnitt (167) umfasst.

5. Zyklonabscheider nach einem der vorhergehenden Ansprüche, **dadurch gekennzeichnet, dass** der Gaseinlass (16) beim Durchtritt durch die Außenwand des Trennkörpers (10) eine Erstreckung in Achsrichtung des Trennkörpers (10) aufweist, die in etwa dem größten Durchmesser des Trennkörpers (10) entspricht.

6. Zyklonabscheider nach einem der vorhergehenden Ansprüche 4 bis 5, **dadurch gekennzeichnet, dass** das wenigstens eine Leitblech (164) im geradlinig verlaufenden Abschnitt (166) des Gaseinlasses (16) angeordnet ist.

7. Zyklonabscheider nach einem der vorhergehenden Ansprüche, **dadurch gekennzeichnet, dass** die Oberkante des Gaseinlass (16) senkrecht zur Längsachse des Trennkörpers (10) verläuft.

8. Zyklonabscheider nach einem der vorhergehenden Ansprüche, **dadurch gekennzeichnet, dass** im Trennkörper (10) vor der Schleuseneinrichtung (12) mindestens eine sprungartige Querschnittsflächenerweiterung (104) vorgesehen ist.

9. Zyklonabscheider nach einem der vorhergehenden Ansprüche, **dadurch gekennzeichnet, dass** ein gemeinsamer geradlinig verlaufender Abschnitt (166) in zwei spiralförmig verlaufende Abschnitte (167-1, 167-2) übergeht, die mit entgegengesetztem Wicklungssinn in zwei parallel angeordnete Trennkörper (10-1, 10-2) münden.

10. Festbettvergaser (2) zum Erzeugen eines Produktgases aus kohlenstoffhaltigen Einsatzstoffen, insbesondere aus schüttbaren Biomasseteilchen, mit einem Vergaserbehälter (20),
einer Zuführung (28) für die kohlenstoffhaltigen Einsatzstoffe im oberen Bereich des Vergaserbehälters (20),
einem im unteren Bereich des Vergaserbehälters (20) angeordneten, drehbaren Rost (4) zur Abstützung der kohlenstoffhaltigen Einsatzstoffe,
einer Luftzuführung (30) zur Zuführung von Verbrennungsluft in den Vergaserbehälter (20), und
einem aus dem Vergaserbehälter (20) aus dem Bereich unter dem Rost (4) herausführenden Produktgasabzug (36) zum Abführen des Produktgases aus dem Vergaserbehälter (20),
**dadurch gekennzeichnet, dass** dem Produktgasabzug (36) ein Zyklonabscheider (1) nach einem der vorhergehenden Ansprüche nachgeschaltet ist.

11. Festbettvergaser nach Anspruch 10, **dadurch gekennzeichnet,**
**dass** ein rohrförmiges Vergaserbauteil (26) in den Vergaserbehälter (20) hineinragt,
**dass** das rohrförmige Vergaserbauteil (26) ein offenes Ende (261) aufweist, das im Vergaserbehälter (20) angeordnet ist,
**dass** das rohrförmige Vergaserbauteil (26) ein geschlossenes Ende (262) aufweist, das aus dem Vergaserbehälter (20) herausragt oder mit der Oberseite des Vergaserbehälters (20) abschließt,
**dass** der Innendurchmesser (d) des rohrförmigen Vergaserbauteils (26) kleiner als der Innendurchmesser (D) des Vergaserbehälters (20) ist,
**dass** das rohrförmige Vergaserbauteil (26) so im Vergaserbehälter (20) angeordnet ist, dass zwischen dem offenen Ende (261) des rohrförmigen Vergaserbauteils (26) und dem Rost (4) ein Abstand (h) verbleibt,
**dass** die Zuführung (28) für die kohlenstoffhaltigen Einsatzstoffe in das geschlossenen Ende (262) des rohrförmigen Vergaserbauteils (26) mündet, und dass die Luftzuführung (30) in das geschlossene Ende (262) des rohrförmigen Vergaserbauteils (26) mündet.

## Claims

1. Cyclone separator (1) for separating solid particles from a gas stream, comprising
a separation body (10) which tapers conically in a downward direction and has a longitudinal axis,
a gas outlet (14) which dips from above into the separation body (10),
a particle outlet (12) arranged at the lower end of the separation body (10), and
a gas inlet (16) which opens into the separation body (10) transverse to the longitudinal axis of the separation body (10), where the gas inlet (16) has a first end (161) and a second end (162), where the second end (162) opens into the separation body (10), and where the gas inlet (16) widens in the axial direction of the separation body (10) and runs around the separation body in a spiral fashion, where the gas inlet (16) has an initial cross-sectional area (A₁) at the first end (161), which cross-sectional area decreases in the direction of the separation body (10) to a minimum cross-sectional area (A₂) at the second end (162),
**characterized in that**
at least one guide plate (164) is arranged in the gas inlet (16) for distributing the solid particles present in the gas stream over the widening cross section of the gas inlet (16).

2. Cyclone separator according to Claim 1, **characterized in that** the cross-sectional area at the second end (A₂) is from 30% to 70% and in particular from 40% to 60% of the initial cross-sectional area (A₁).

3. Cyclone separator according to either of the preceding claims, **characterized in that** the cross-sectional area (A) of the gas inlet (16) decreases continuously.

4. Cyclone separator according to any of the preceding claims, **characterized in that** the gas inlet (16) comprises a section (166) which runs in a straight line and a section (167) which runs in a spiral fashion.

5. Cyclone separator according to any of the preceding claims, **characterized in that** the gas inlet (16) has, when penetrating through the outer wall of the separation body (10), an extension in the axial direction of the separation body (10) which corresponds approximately to the greatest diameter of the separation body (10).

6. Cyclone separator according to either of the preceding Claims 4 and 5, **characterized in that** the at least one guide plate (164) is arranged in the section (166) of the gas inlet (16) which runs in a straight line.

7. Cyclone separator according to any of the preceding claims, **characterized in that** the upper edge of the gas inlet (16) runs perpendicular to the longitudinal axis of the separation body (10).

8. Cyclone separator according to any of the preceding claims, **characterized in that** at least one abrupt widening of the cross-sectional area (104) is provided in the separation body (10) upstream of the lock device (12).

9. Cyclone separator according to any of the preceding claims, **characterized in that** a common section (166) running in a straight line goes over into two spiral sections (167-1, 167-2) which open with opposite winding directions into two parallel separation bodies (10-1, 10-2).

10. Fixed-bed gasifier (2) for producing a product gas from carbon-containing feed materials, in particular from pourable biomass particles, comprising
a gasifier vessel (20),
a feed conduit (28) for the carbon-containing feed materials in the upper region of the gasifier vessel (20),
a rotatable grating (4) for supporting the carbon-containing feed materials arranged in the lower region of the gasifier vessel (20),
an air feed conduit (20) for feeding combustion air into the gasifier vessel (20), and
a product gas offtake (36) for discharging the product gas from the gasifier vessel (20), which product gas offtake leads out from the gasifier vessel (20) from the region below the grating (4), **characterized in that** a cyclone separator (1) according to any of the preceding claims is located downstream of the product gas offtake (36).

11. Fixed-bed gasifier according to Claim 10, **characterized**
**in that** a tubular gasifier component (26) projects into the gasifier vessel (20),
**in that** the tubular gasifier component (26) has an open end (261) which is arranged in the gasifier vessel (20),
**in that** the tubular gasifier component (26) has a closed end (262) which projects from the gasifier vessel (20) or ends flush with the upper side of the gasifier vessel (20),
**in that** the internal diameter (d) of the tubular gasifier component (26) is less than the internal diameter (D) of the gasifier vessel (20),
**in that** the tubular gasifier component (26) is arranged in the gasifier vessel (20) in such a way that a spacing (h) remains between the open end (261) of the tubular gasifier component (26) and the grating (4),
**in that** the feed conduit (28) for the carbon-containing feed materials opens into the closed end (262) of the tubular gasifier component (26), and in that the air feed conduit (30) opens into the closed end (262) of the tubular gasifier component (26) .

## Revendications

1. Séparateur à cyclone (1) servant à la séparation de particules solides d'un flux de gaz, comportant un corps de séparation (10) se terminant de manière conique vers le bas, lequel présente un axe longitudinal, une sortie de gaz (14) plongeant par le haut dans le corps de séparation (10),
une sortie de particules (12) disposée à l'extrémité inférieure du corps de séparation (10), et
une entrée de gaz (16) débouchant dans le corps de séparation (10) transversalement à l'axe longitudinal du corps de séparation (10), l'entrée de gaz (16) comprenant une première extrémité (161) et une deuxième extrémité (162), la deuxième extrémité (162) débouchant dans le corps de séparation (10), et l'entrée de gaz (16) s'élargissant dans la direction axiale du corps séparation (10) et enveloppant le corps de séparation en forme de spirale, l'entrée de gaz (16) présentant à la première extrémité (161) une aire en section transversale initiale (A₁) qui diminue en direction du corps de séparation (10) jusqu'à une aire en section transversale minimale (A₂) à la deuxième extrémité (162),
**caractérisé en ce**
**qu'**au moins un déflecteur (164) servant à la répartition des particules solides contenues dans le flux de gaz sur la section transversale s'élargissant de l'entrée de gaz (16) est disposé dans l'entrée de gaz (16).

2. Séparateur à cyclone selon la revendication 1, **caractérisé en ce que** l'aire en section transversale à la deuxième extrémité (A₂) vaut entre 30% et 70% et en particulier entre 40% et 60% de l'aire en section transversale initiale (A₁).

3. Séparateur à cyclone selon l'une des revendications précédentes, **caractérisé en ce que** l'aire en section transversale (A) de l'entrée de gaz (16) diminue de manière continue.

4. Séparateur à cyclone selon l'une des revendications précédentes, **caractérisé en ce que** l'entrée de gaz (16) comporte une partie (166) s'étendant de manière rectiligne et une partie (167) s'étendant en forme de spirale.

5. Séparateur à cyclone selon l'une des revendications précédentes, **caractérisé en ce que** l'entrée de gaz (16) présente, lors du passage à travers la paroi extérieure du corps de séparation (10), une étendue dans la direction axiale du corps de séparation (10) qui correspond approximativement au plus grand diamètre du corps de séparation (10).

6. Séparateur à cyclone selon l'une des revendications précédentes 4 et 5, **caractérisé en ce que** l'au moins un déflecteur (164) est disposé dans la partie (166) s'étendant de manière rectiligne de l'entrée de gaz (16).

7. Séparateur à cyclone selon l'une des revendications précédentes, **caractérisé en ce que** le bord supérieur de l'entrée de gaz (16) s'étend perpendiculairement à l'axe longitudinal du corps de séparation (10).

8. Séparateur à cyclone selon l'une des revendications précédentes, **caractérisé en ce qu'**au moins un élargissement brusque d'aire en section transversale (104) est prévu dans le corps de séparation (10) avant le dispositif de sas (12).

9. Séparateur à cyclone selon l'une des revendications précédentes, **caractérisé en ce qu'**une partie commune (166) s'étendant de manière rectiligne se prolonge par deux parties (167-1, 167-2) s'étendant en forme de spirale qui débouchent avec des sens d'enroulement opposés dans deux corps de séparation (10-1, 10-2) disposés parallèlement.

10. Gazéificateur (2) à lit fixe servant à former un produit gazeux à partir de matières de charge carbonées, en particulier de particules de biomasse, comportant un récipient de gazéification (20),
une amenée (28) de matières de charge carbonées dans la région supérieure du récipient de gazéification (20), une grille rotative (4) servant à soutenir les matières de charge carbonées et disposée dans la région inférieure du récipient de gazéification (20),
une amenée d'air (30) servant à l'amenée d'air de combustion dans le récipient de gazéification (20), et une extraction (36) de produit gazeux sortant du récipient de gazéification (20) hors de la région en dessous de la grille (4) et servant à l'évacuation du produit gazeux hors du récipient de gazéification (20), **caractérisé en ce qu'**un séparateur à cyclone (1) selon l'une des revendications précédentes est placé en aval de l'extraction (36) de produit gazeux.

11. Gazéificateur à lit fixe selon la revendication 10, **caractérisé**
**en ce qu'**un composant tubulaire (26) du gazéificateur pénètre dans le récipient de gazéification (20),
**en ce que** le composant tubulaire (26) du gazéificateur comprend une extrémité ouverte (261) qui est disposée dans le récipient de gazéification (20),
**en ce que** le composant tubulaire (26) du gazéificateur comprend une extrémité fermée (262) qui fait saillie hors du récipient de gazéification (20) ou se termine par le côté supérieur du récipient de gazéification (20),
**en ce que** le diamètre intérieur (d) du composant tubulaire (26) du gazéificateur est inférieur au diamètre intérieur (D) du récipient de gazéification (20),
**en ce que** le composant tubulaire (26) du gazéificateur est disposé dans le récipient de gazéification (20) de telle sorte qu'il reste une distance (h) entre l'extrémité ouverte (261) du composant tubulaire (26) du gazéificateur et la grille (4),
**en ce que** l'amenée (28) de matières de charge carbonées débouche dans d'extrémité fermée (262) du composant tubulaire (26) du gazéificateur et
**en ce que** l'amenée d'air (30) débouche dans l'extrémité fermée (262) du composant tubulaire (26) du gazéificateur.
